# EUROPEAN PATENT APPLICATION

(11) **EP 1 955 758 A1**
(43) Date of publication of application: **13.08.2008**
(21) Application number: 07102017.6
(22) Date of filing: 09.02.2007
(51) Int. Cl.: B01D 53/50, B01D 53/68

(54) **A method and a system for the removal of sulphur dioxide from a process gas**

(71) Applicant: Alstom Technology Ltd, 5400 Baden (CH)
(72) Inventor: Åhman, Stefan, 352 42 VÄXJÖ (SE)
(74) Representative: Hjalmarsson, Magnus Axel

(57) **Abstract**

A gas cleaning system (1) for separating gaseous pollutants, including sulphur dioxide, from process gases (2) comprises a contact reactor (4). The contact reactor (4) is operative for mixing the process gases (2) with a solid material comprising a particulate absorbent material, such that said particulate absorbent material reacts with sulphur dioxide. A dust separator (6) is operative for capturing the particulate absorbent material. A sulphur dioxide measurement device (48) is operative for measuring the amount of sulphur dioxide of the process gases (2). A chloride supply system (39) is operative for supplying a chloride containing compound to said solid material. A control system (50) is operative for the purpose of controlling the supply of said chloride containing compound from said chloride supply system (39) to said solid material in response to an amount of sulphur dioxide of the process gases (2) measured by said measurement device (48).

## Description

### Field of the invention

The present invention relates to a gas cleaning system for separating gaseous pollutants, including sulphur dioxide, from process gases, such as flue gases, said gas cleaning system comprising a contact reactor which is operative for mixing the process gases with a solid material comprising a particulate absorbent material, such that said particulate absorbent material reacts with sulphur dioxide, and a dust separator which is operative for capturing the particulate absorbent material, the dust separator being operative for discharging cleaned process gases.

The present invention also relates to a method of separating gaseous pollutants, including sulphur dioxide, from process gases, such as flue gases.

### Background of the invention

In the combustion of a fuel, such as coal, oil, peat, waste, etc., in a combustion plant, such as a power plant or a waste incineration plant, hot process gases are generated. For separating gaseous pollutants, such as hydrochloric acid and sulphur dioxide, from such hot process gases, often referred to as flue gases, a method is frequently used, in which a lime-containing particulate absorbent material is introduced into the hot process gases to react with the gaseous pollutants. When the particulate absorbent material reacts with the gaseous pollutants, the gaseous pollutants are converted chemically or physically into dust, which is then separated in a filter. For example, WO 96/16722 discloses a method, in which lime-containing dust is mixed with water in a mixer, and is then introduced into a contact reactor to react with the gaseous pollutants of flue gases. Thereafter, the dust formed by this reaction is separated in a filter and is recirculated to the mixer to be mixed with water, and to be introduced once more into the contact reactor. The efficiency of the separation of the gaseous pollutants from the flue gases is adjusted by means of controlling the addition of water to the mixer.

Some types of fuel, such as municipal waste and industrial waste, have a composition which varies considerably over time and which is difficult to predict. This causes occasional peaks of gaseous pollutants, such as sulphur dioxide and hydrochloric acid, in the flue gases. However, when operating a gas cleaning system in accordance with the teachings of WO 96/16722 the possibility to handle such peaks may be limited by the fact that the dust, which circulates in the gas cleaning system, can become sticky when a large amount of water is added to the mixer. The consequence is that peaks of gaseous pollutants caused by the fuel can result in an increased emission of such gaseous pollutants to the atmosphere.

### Summary of the invention

An object of the present invention is to provide a gas cleaning system for cleaning process gases, which gas cleaning system can manage various concentrations of sulphur dioxide in the process gases.

This object is achieved by a gas cleaning system for separating gaseous pollutants, including sulphur dioxide, from process gases, such as flue gases, said gas cleaning system comprising a contact reactor which is operative for mixing the process gases with a solid material comprising a particulate absorbent material, such that said particulate absorbent material reacts with sulphur dioxide, and a dust separator which is operative for capturing the particulate absorbent material, the dust separator being operative for discharging cleaned process gases, the gas cleaning system being characterised in further comprising
a sulphur dioxide measurement device, which is operative for the purpose of measuring, directly or indirectly, the amount of sulphur dioxide in the process gases,
a chloride supply system which is operative for supplying at least one chloride containing compound to said solid material, and
a control system, which is operative for the purpose of controlling the supply of said at least one chloride containing compound from said chloride supply system to said solid material in response to an amount of sulphur dioxide in the process gases measured by said sulphur dioxide measurement device.

An advantage of this gas cleaning system is that it becomes possible to achieve good conditions for the removal of sulphur dioxide in the gas cleaning system, almost regardless of the amount of sulphur dioxide in the process gases, and regardless of the amount of hydrochloric acid in the process gases.

According to one embodiment, said chloride supply system comprises a tank, which is operative for containing a chloride containing solution. An advantage of this embodiment over the use of chloride containing solid compounds is that a chloride containing solution constitutes a comparably simple manner of administering a chloride containing compound to the solid material. Furthermore, in a solution, the chloride ions of the chloride containing compound are readily accessible for reactions, such that the response time becomes shorter when supplying such a solution to said solid material.

According to another embodiment said chloride supply system comprises a silo which is operative for containing a chloride containing solid compound. An advantage of this embodiment over the use of a chloride containing solution is that chloride containing solid compounds, such as powdered calcium chloride, CaCl₂, are comparably cheap and can be stored in large amounts in silos. Thus, the operational cost of the gas cleaning system can be reduced.

According to yet another embodiment said gas cleaning system comprises a first chloride supply system which is operative for supplying a chloride containing solid compound to said solid material, and a second chloride supply system which is operative for supplying a chloride containing solution to said solid material. An advantage of this gas cleaning system is that it combines the fast response of the chloride containing solution, which can be supplied to control fast increases in the amount of sulphur dioxide in the process gases, with the low operational cost of a chloride containing solid compound, that can be utilized for other operational conditions, such as a steady or a decreasing amount of sulphur dioxide in the process gases.

Said sulphur dioxide measurement device may comprise a first gas analyser which is operative for measuring the concentration of sulphur dioxide in said process gases upstream of said contact reactor. A direct measurement of the concentration of sulphur dioxide in the process gases, that are to enter the gas cleaning system, is often the quickest manner of establishing whether or not it is necessary to supply the chloride containing compound to said solid material.

According to one embodiment said gas cleaning system comprises a second gas analyser, which is operative for measuring a concentration of hydrochloric acid in said process gases upstream of said contact reactor. In this embodiment, the control system is operative for estimating, based on measurements by said second gas analyser, the concentration of chlorides in said solid material. Using the estimated concentration of chlorides in the solid material, the control system determines if the chloride containing compound needs to be supplied or not. An advantage of this embodiment is that estimating the concentration of chlorides in said solid material makes it easier for the control system to determine when it is necessary to supply the chloride containing compound, and in what amount. That way, the chloride containing compound is only supplied when necessary, and only in the amount that is necessary for the current conditions, such that the consumption of the chloride containing compound is minimized.

The sulphur dioxide measurement device may comprise a third gas analyser which is operative for measuring the concentration of sulphur dioxide in said cleaned process gases downstream of said dust separator, such that the capability of the gas cleaning system to remove a certain portion of the measured concentration of sulphur dioxide in the process gases can be estimated. An advantage of this embodiment is that the measurements executed by the third gas analyser provides quick feed-back regarding the gas cleaning system's ability to remove a certain portion of the present concentration of sulphur dioxide in the process gases.

In various embodiments, at least a portion of said solid material circulates through the gas cleaning system. In such embodiments, said control system is operative for estimating the concentration of chlorides in said solid material, and for controlling the supply of said at least one chloride containing compound from said chloride supply system based on an estimated need for chlorides in said solid material with respect to an amount of sulphur dioxide of said process gases as measured by said sulphur dioxide measurement device. An advantage of this embodiment is that the control system can, based on a relation between the amount of sulphur dioxide in the process gases and the corresponding need for chloride concentration in said solid material, control the supply of the chloride containing compound in such a manner that a sufficient removal of the sulphur dioxide is obtained without overdosing the chloride containing compound.

A further object of the present invention is to provide a method of separating gaseous pollutants from process gases, which method makes it possible to manage various concentrations of sulphur dioxide in the process gases.

This object is achieved by a method of separating gaseous pollutants, including sulphur dioxide, from process gases, such as flue gases, in which method the process gases are transported to a gas cleaning system, said gas cleaning system comprising a contact reactor in which the process gases are mixed with a solid material comprising a particulate absorbent material, such that said particulate absorbent material reacts with sulphur dioxide, and a dust separator in which the solid material is separated, and in which method cleaned process gases leave the dust separator, the method being characterised in
measuring, directly or indirectly, the amount of sulphur dioxide in the process gases,
determining whether or not the chloride concentration of said solid material needs to be adjusted, and
controlling, in response to said measured amount of sulphur dioxide of the process gases, a supply of at least one chloride containing compound to said solid material.

An advantage of this method is that the operation of the gas cleaning system is controlled in such a manner that an efficient removal of sulphur dioxide from the process gases always can be obtained, almost regardless of the actual present amount of sulphur dioxide of the process gases.

Preferably said method further comprises, prior to the step of determining whether or not the chloride concentration of said solid material needs to be adjusted, a step of estimating a present concentration of chlorides of said solid material, said step of determining whether or not the chloride concentration of said solid material needs to be adjusted further comprising accounting for the estimated present concentration of chlorides of said solid material. An advantage of this method is that the chloride containing compound is only supplied when found necessary, thereby reducing the consumption of the chloride containing compound.

According to a preferred embodiment said chloride containing compound is comprised in a waste material from a gas cleaning process, the chloride concentration of said waste material being higher than the chloride concentration of said solid material. An advantage of this embodiment is that the cost of a waste material, which contains at least one chloride containing compound, is lower than the cost of a fresh chloride containing compound. Furthermore, if a waste material is utilized then the total amount of waste material produced is minimized. According to a still more preferred embodiment waste material of said gas cleaning system is kept from operating periods of high chloride concentration in said solid material, and is used as a source of a chloride containing compound during periods of low chloride concentration in said solid material.

Preferably said solid material is mixed with said chloride containing compound in a mixer prior to mixing the process gases with said solid material in the contact reactor. An advantage of this embodiment is that the degree of utilization of the chloride containing compound is high, and the response in improved removal of sulphur dioxide is quick.

Further objects and features of the present invention will be apparent from the description and the claims.

### Brief description of the drawings

The invention will now be described in more detail with reference to the appended drawings in which:
Fig. 1 is a sectional side view, and schematically illustrates a gas cleaning system according to a first embodiment of the present invention.
Fig. 2 is a sectional side view, and schematically illustrates a gas cleaning system according to a second embodiment of the present invention.
Fig. 3 is a flow diagram illustrating a method in accordance with an embodiment of the present invention.
Fig. 4a illustrates emissions of sulphur dioxide from a plant operating in accordance with the prior art.
Fig. 4b illustrates emissions of hydrochloric acid from a plant operating in accordance with the prior art
Fig. 5 illustrates one of the discoveries on which the various embodiments of the present invention is based.

### Description of preferred embodiments

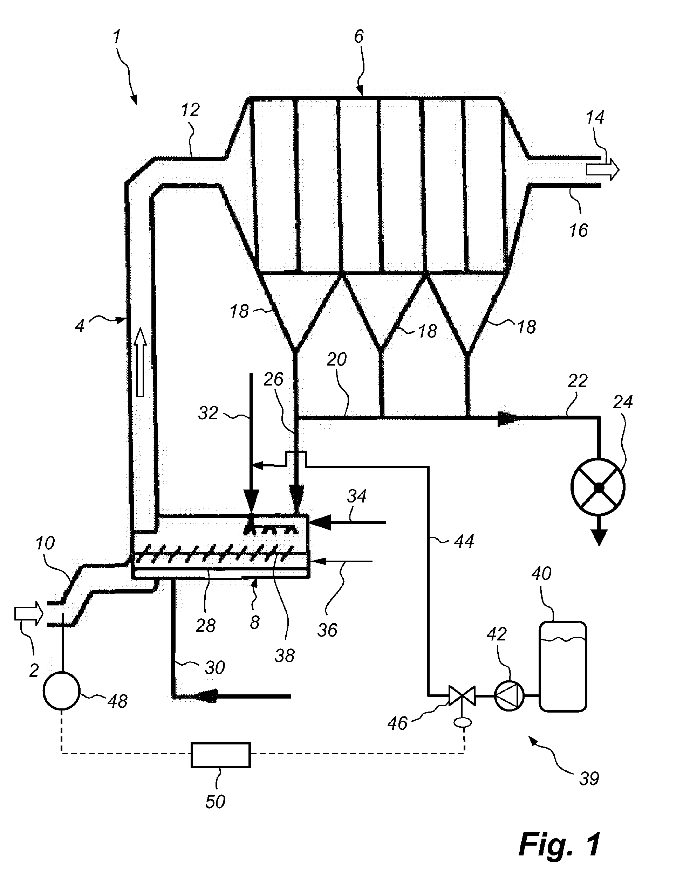

Fig. 1 is a schematic representation of a gas cleaning system 1, as seen from the side thereof. The gas cleaning system 1 is utilized for cleaning process gases in the form of a gas mixture 2. The gas mixture 2 is flue gases that have been formed during the incineration of household waste. The gas mixture 2 contains dust, such as fly ash, and gaseous pollutants, including sulphur dioxide, SO₂, and hydrochloric acid, HC1. The gas cleaning system 1 comprises a contact reactor 4, a dust separator in the form of a fabric filter 6, that is sometimes referred to as a bag house, and a mixer 8. The gas mixture 2 is, via a duct 10, transported to the contact reactor 4. The contact reactor 4 is operative for contacting a powdered solid material comprising a particulate absorbent material, which is reactive with the gaseous pollutants of the gas mixture 2, with the gas mixture 2 in order to convert the gaseous pollutants of the gas mixture 2 into separable dust. The gas mixture 2 is transported, via a duct 12, to the fabric filter 6 in which the solid material, i.e., the formed dust, the fly ash, and the remaining particulate absorbent material, is separated from the gas mixture 2. The particulate absorbent material reacts with the gaseous pollutants of the gas mixture 2 both in the contact reactor 4 and in the fabric filter 6. The cleaned process gases, which have the form of cleaned flue gases 14, are transported from the fabric filter 6 via a duct 16 and are emitted into the ambient air via a stack, which is not shown in Fig. 1. The fabric filter 6 comprises three dust hoppers 18 that collect the separated solid material, i.e., the formed dust, the fly ash, and the remaining particulate absorbent material.

The solid material, i.e., the formed dust, the fly ash and the remaining particulate absorbent material, is transported to a common dust storage system 20. A minor portion of the solid material that is separated in the fabric filter 6 is discharged from the gas cleaning system 1 via a pipe 22. The pipe 22 opens into a rotary discharger 24. The discharged solid material is transported from the rotary discharger 24 to a silo, which is not shown, that is operative for storing the discharged solid material until the discharged solid material is transported to a landfill.

The major portion of the solid material, i.e., the formed dust, the fly ash, and the remaining particulate absorbent material, that is collected in the fabric filter 6 is transported, via a pipe 26, to the mixer 8. The mixer 8 is provided with a fluidising net or cloth 28. Pressurised air is introduced under the cloth 28 via a pipe 30 in order to fluidise the solid material in the mixer 8.

The mixer 8 is provided with a pipe 32, which is operative for supplying water to the mixer 8. Fresh absorbent, such as burnt lime, CaO, or hydrated lime, Ca(OH)₂, is supplied to the mixer 8 via a pipe 34. The water is added to the mixer 8 via the pipe 32 for the purpose of moistening the solid material in the mixer 8, and for the purpose of enhancing the slaking rate of any burnt lime, CaO, comprised in the fresh absorbent to form particulate absorbent material in the form of hydrated lime, Ca(OH)₂.

The amount of fresh absorbent that is supplied via the pipe 34 is usually controlled to a certain stoichiometric ratio, SR. The SR describes how much fresh absorbent, calculated as moles of calcium ions, Ca²⁺, that is required to react with one mole of sulphur dioxide, SO₂, or with two moles of hydrochloric acid, HCl. Ideally the stoichiometric ratio is 1.0, which means that each mole of SO₂ entering the gas cleaning system 1, and being removed therein, correspond to one mole of Ca²⁺ consumed, and that each mole of HCl entering the gas cleaning system 1, and being removed therein, correspond to ½ mole of Ca²⁺ consumed. In practice the stoichiometric ratio is often in the range of 1.5 to 3.0.

Further additives, such as activated carbon, can be supplied via a pipe 36. The mixer 8 is provided with an agitator 38 which is operative for the purpose of thoroughly mixing the solid material that the mixer 8 has received from the fabric filter 6 with said fresh absorbent, said water, and said further additives, such that a solid material, comprising particulate absorbent material, being ready to be introduced in the contact reactor 4 is formed by means of the mixer 8. A thorough description of a mixer which can be utilized in the gas cleaning system 1 can be found in the document WO 97/37747. The solid material, comprising particulate absorbent material, that has been thoroughly mixed in the mixer 8 is introduced at the bottom of the contact reactor 4 and is thereby introduced into the gas mixture 2 for absorbing further gaseous pollutants therefrom. It will be appreciated that the solid material is circulated many times in the gas cleaning system 1. The minor portion of the solid material which is discharged via the rotary discharger 24 serves the purpose of keeping the amount of solid material in the gas cleaning system 1 constant. The gas mixture 2 contains some fly ash, reaction products are formed continuously, and fresh absorbent and additives are supplied, such that there is a continuous flow of material into the gas cleaning system 1. The continuous flow of material into the gas cleaning system 1 is compensated for by the discharge of solid material via the rotary discharger 24. Thus, the amount of circulating solid material that is present in the gas cleaning system 1 is rather constant over time.

The gas cleaning system 1 is further provided with a chloride supply system 39 which comprises a storage means in the form of a tank 40 for storing calcium chloride, CaCl₂, or other chloride containing compound, in an aqueous solution. The chloride supply system 39 further comprises a pump 42 which is adapted for pumping said aqueous solution of CaCl₂ via a pipe 44 to the pipe 32 that is adapted for supplying water to the mixer 8. A valve 46 is placed in the pipe 44 for the purpose of controlling the amount of the aqueous solution that is forwarded to the water pipe 32 and, thus, further to the mixer 8.

A sulphur dioxide measurement device in the form of a gas analyser 48 measures, in the gas duct 10 and on a continuous basis, the concentration of sulphur dioxide of the gas mixture 2, that is to be cleaned in the gas cleaning system 1. The gas analyser 48 sends information about the current concentration of sulphur dioxide of the gas mixture 2 to a control system in the form of a process computer 50.

The process computer 50 controls, based on the information from the gas analyser 48, the valve 46 and thereby controls which amount of the aqueous solution of calcium chloride that is to be fed to the mixer 8 via the pipes 44 and 32. For example, when an increased amount of sulphur dioxide is detected in the gas mixture 2, the process computer 50 orders, in a manner which will be described in more detail below, the valve 46 to open, such that calcium chloride is fed from the chloride supply system 39 to the mixer 8, in which the calcium chloride is mixed with the solid material present in the mixer 8.

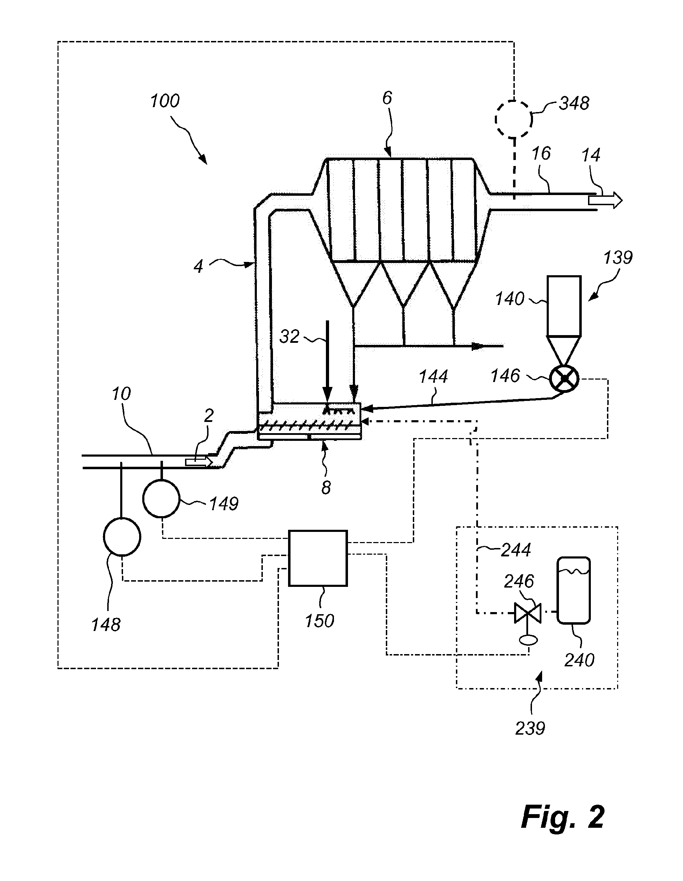

Fig. 2 illustrates an alternative embodiment in the form of a gas cleaning system 100. The gas cleaning system 100 comprises a contact reactor 4, a fabric filter 6, and a mixer 8 that are similar to the corresponding devices of the gas cleaning system 1 and that are, for that reason, given the same reference numerals. A gas mixture 2 is, via a duct 10, supplied to the contact reactor 4 in which the gas mixture 2 is contacted with a solid material, which contains a particulate absorbent material, in a similar manner as has been described hereinbefore with reference to Fig. 1. The solid material, including fly ash, formed dust, remaining particulate absorbent material, etc., is removed in the fabric filter 6, and cleaned flue gases 14 leave the fabric filter 6 via a clean gas duct 16.

The flue gas cleaning system 100 further comprises a first chloride supply system 139, which comprises a silo 140 that is adapted for containing calcium chloride (CaCl₂) or other calcium containing compound, in solid form. For example, the calcium chloride in silo 140 may be in the form of a powder. The chloride supply system 139 further comprises a rotary discharger 146 which is adapted for controlling the amount of calcium chloride that is fed via a pipe 144 to the mixer 8.

A first gas analyser 148 measures, in the gas duct 10 and on a continuous or periodic basis, the concentration of sulphur dioxide in the gas mixture 2, that is to be cleaned in the gas cleaning system 100. The first gas analyser 148 sends information about the current concentration of sulphur dioxide of the gas mixture 2 to a process computer 150.

A second gas analyser 149 measures, in the gas duct 10 and on a continuous or periodic basis, the concentration of hydrochloric acid in the gas mixture 2, that is to be cleaned in the gas cleaning system 100. The second gas analyser 149 sends information about the current concentration of hydrochloric acid in the gas mixture 2 to the process computer 150.

The process computer 150 is adapted for controlling the operation of the rotary discharger 146 such that the amount of calcium chloride fed to the mixer 8 can be controlled in response to the current conditions of the gas mixture 2. For example, the process computer 150 receives information from the second gas analyser 149 about the current concentration of hydrochloric acid in the gas mixture 2.

According to one embodiment the process computer 150 is operative for estimating the present concentration of chlorides of the solid material circulating in the flue gas cleaning system 100. Such estimation can be based on, e.g., stored historic information on the concentration of hydrochloric acid in the gas mixture 2, historic information on the concentration of other pollutants, historic information on the gas flow, historic information on the amount of fresh absorbent added, and an estimation of the amount of fly ash entering the gas cleaning system 100, and/or historic information on the amount of material that has been discharged from the gas cleaning system 100 by means of a rotary discharger, not shown in Fig. 2, but similar to the rotary discharger 24 of Fig. 1. Based on such historic information the process computer 150 may form a mass balance which represents the balance between the amount of chlorides entering the gas cleaning system 100 and the amount of chlorides leaving the gas cleaning system 100. By means of continuous, or periodic, updating of such a mass balance the process computer 150 can calculate the present concentration of chlorides of the solid material circulating in the flue gas cleaning system 100. In such estimation of the concentration of chlorides in the solid material circulating in the flue gas cleaning system 100, the process computer 150 may also account for the amount of calcium chloride that has already previously been supplied to the mixer 8 by means of the chloride supply system 139. When an increased concentration of sulphur dioxide is detected by the first gas analyser 148 the process computer 150 can determine, based on the estimated present concentration of chlorides in the circulating solid material, whether it is required to add calcium chloride from the silo 140, and in which amount, or if the increased amount of sulphur dioxide can be managed by the concentration of chlorides that is already available in the circulating solid material.

Fig. 2 illustrates a second option in which the process computer 150 controls a valve 246 of a second chloride supply system 239. The valve 246 controls that amount of an aqueous calcium chloride solution which is supplied from a tank 240 of the second chloride supply system 239 to the mixer 8 via a pipe 244. The tank 240 is operative for containing the calcium chloride solution, and may be pressurized or elevated such that the calcium chloride solution flows from the tank 240 to the mixer 8 via pipe 244. Alternatively, a pump (not shown) may be used to deliver the calcium chloride solution from the tank 240 to the mixer 8.

The tank 240, the pipe 244, and the valve 246 of the second chloride supply system 239 could be utilized as an alternative to the silo 140, the rotary discharger 146 and the pipe 144 of the first chloride supply system 139 for to supply calcium chloride to the mixer 8 when the process computer 150 sends a signal to such extent. However, it is also possible to utilize both chloride supply systems 139, 239 in combination for supplying calcium chloride to the mixer 8. In such a gas cleaning system 100, which utilizes both chloride supply systems 139, 239, a quick increase in the amount and/or concentration of sulphur dioxide in the gas mixture 2 (i.e., the initial phase of what is called a sulphur dioxide peak) could be managed by supplying the aqueous calcium chloride solution from the tank 240 of the second chloride supply system 239. In a solution, the chloride ions of the calcium chloride solution are readily accessible for reactions, thus providing a quick increase in removal capacity. For the later phases of the sulphur dioxide peak, the solid calcium chloride can be fed to the mixer 8 from the silo 140 of the first chloride supply system 139. The response regarding increased removal capacity for sulphur dioxide tends to be slower when feeding solid calcium chloride, but the cost of solid calcium chloride is usually lower than that of calcium chloride in aqueous solution. Thus, utilizing the feed of the aqueous calcium chloride solution from the tank 240 during the initial phase of a sulphur dioxide peak, and utilizing the feed of solid calcium chloride from the silo 140 during the later phases of a sulphur dioxide peak results in a quick response to sulphur dioxide peaks and a low operating cost.

Fig. 2 also illustrates an optional third gas analyser 348, which is operative for measuring the concentration of sulphur dioxide after the fabric filter 6, i.e., in the cleaned flue gases 14 leaving the gas cleaning system 100 via the clean gas duct 16. The third gas analyser 348 provides this information about the sulphur dioxide concentration in the cleaned flue gases 14 to the process computer 150. When an increase in the concentration of sulphur dioxide of the cleaned flue gases 14 is measured by means of the third gas analyser 348 it can be understood that a sulphur dioxide peak has occurred, and that the concentration of chlorides in the circulating solid material was not sufficient to manage that peak. Thus, the third gas analyser 348 provides a feed-back signal for use by the process computer 150 in determining whether or not to adjust the amount of calcium chloride being fed from the silo 140 and/or from the tank 240.

It is contemplated that the third gas analyser 348 could be utilized as an alternative to the second gas analyser 149 and the estimation of the chloride concentration in the circulating solid material, since the third gas analyser 348 provides an indirect indication of the concentration of chlorides in the solid material circulating in the gas cleaning system 100. In such a case the process computer 150 could control the supply of the calcium chloride from the silo 140 and/or the tank 240 to the mixer 8 with the aim of making the concentration of sulphur dioxide in the cleaned flue gases 14, as measured by the third gas analyser 348, remain below a certain set point. Such a setpoint may be based on SO₂ limits determined by regulatory authorities (e.g., 10 mg SO_{2/}Nm³ d.g. 11% O₂). The third gas analyser 348 could also be utilized in combination with the second gas analyser 149 and the estimation of the chloride concentration in the circulating solid material based on measurements by said second gas analyser 149, and/or as alternative to, or in combination with, the first gas analyser 148.

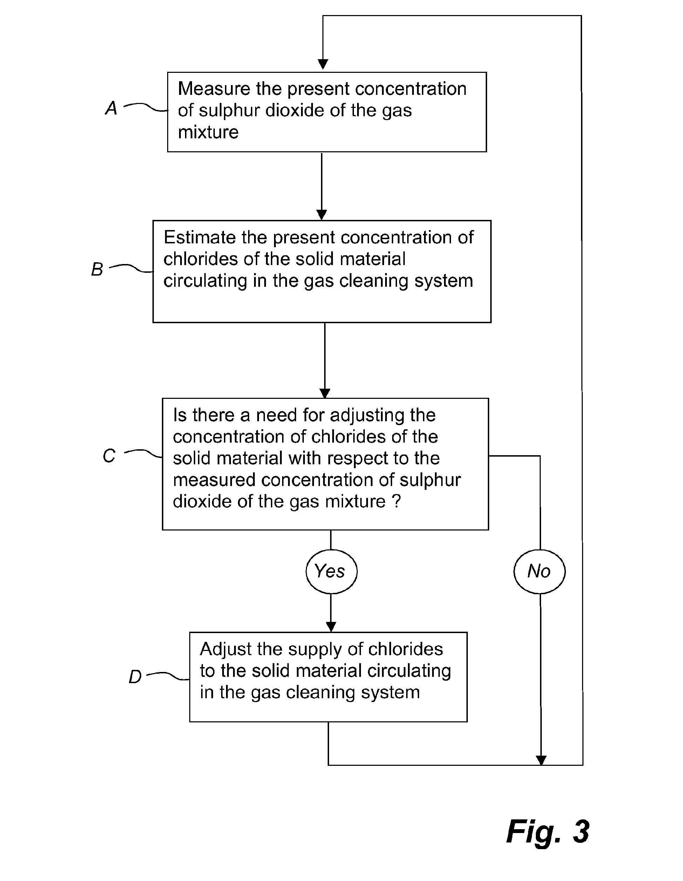

Fig. 3 illustrates a method, comprising steps A, B, C and D, of controlling the removal of sulphur dioxide in the gas cleaning system 1 or the gas cleaning system 100.

In a first step A the present concentration of sulphur dioxide in the gas mixture 2 is measured. As described hereinbefore this can be made by directly measuring the concentration of sulphur dioxide of the gas mixture 2, upstream of the contact reactor 4, by means of the gas analyser 48, or the first gas analyser 148. A further option, also described hereinbefore with reference to Fig. 2, is to measure the concentration of sulphur dioxide of the cleaned flue gases 14 by means of a third gas analyser 348. Measuring the concentration of sulphur dioxide of the cleaned flue gases 14 provides an indirect measure of the amount of sulphur dioxide of the gas mixture 2.

In a second step B, which is optional, the present concentration of chlorides in the circulating solid material is estimated. The circulating solid material comprises mainly, as described hereinbefore with reference to Fig. 1, collected fly ash, dust formed by the reaction of the particulate absorbent material with the gaseous pollutants, and particulate absorbent material. As described hereinbefore the concentration of chlorides in the solid material that is introduced in the contact reactor 4 has been found to be important to the efficiency of removing, in particular, sulphur dioxide from the gas mixture 2.

The concentration of chlorides in the circulating solid material can be determined in different manners. A first option is to take out a sample of the circulating solid material and analyse that sample with respect to the concentration of chlorides. A second option, which has been described hereinbefore with reference to Fig. 2, is to measure the concentration of hydrochloric acid in the gas mixture 2 by means of a the second gas analyser 149. The process computer 150 can log these values and utilize a mass balance as described hereinbefore, which mass balance is updated continuously, or periodically, to estimate the present concentration of chlorides in the circulating solid material. A third option, also described hereinbefore, is to measure the concentration of sulphur dioxide in the cleaned flue gases 14 by means of the third gas analyser 348. The process computer 150 can, based on the information from the third gas analyser 348, estimate how much chlorides are available in the circulating solid material. Preferably, in this third option, the process computer 150 also receives information from the first gas analyser 148 about the concentration of sulphur dioxide in the gas mixture 2. By comparing the concentration of sulphur dioxide in the gas mixture 2 to the concentration of sulphur dioxide in the cleaned flue gases 14 the process computer 150 can estimate the concentration of chlorides in the circulating solid material. For example, the process computer 150 could utilize calibration curves indicating the relation between concentration of sulphur dioxide of the gas mixture 2 and concentration of sulphur dioxide of the cleaned flue gases 14 at various chloride concentrations of the circulating solid material.

Using the information from step A and, optionally, step B, the process computer 50 or 150 can, in steps C and D, control the concentration of chlorides in the circulating solid material. In step C, it is determined whether or not the amount of chloride containing compound in the solid material needs to be adjusted and, optionally, by what amount. This determination is made in response to the concentration of sulphur dioxide that has been measured in step A. In one example, process computer 50 or 150 compares the measured concentration of sulphur dioxide in the gas mixture 2 provided by gas analysers 48 or 148 to one or more predetermined values and, based on this comparison, determines if the amount of chloride containing compound added by chloride supply system 39, 139, and/or 239 needs to be adjusted. For instance, if the concentration of sulphur dioxide of the gas mixture 2 exceeds a predetermined value (such as, for example, 500 mg/Nm³ d.g. of SO₂), then the amount of chloride containing compound added by chloride supply system 39, 139, and/or 239 needs to be increased. Conversely, if the concentration of sulphur dioxide of the gas mixture 2 is less than a predetermined value, then the amount of chloride containing compound added by chloride supply system 39, 139, and/or 239 may be maintained (no change) or decreased. The difference between the concentration of sulphur dioxide of the gas mixture 2 and the predetermined value may be used to determine the magnitude of adjustment necessary. It is also contemplated that process computer 50 or 150 may employ a lookup table, an equation, or the like to provide an appropriate amount of chloride containing compound in response to the measured concentration of sulphur dioxide.

Where the third gas analyser 348 is utilized, as long as the third gas analyser 348 measures a concentration of sulphur dioxide in the cleaned flue gases 14 above a predetermined threshold, the process computer 150 may determine that there is a need for more chlorides in the circulating solid material. Conversely, as long as the third gas analyser 348 measures a concentration of sulphur dioxide in the cleaned flue gases 14 below a predetermined threshold, the process computer 150 may determine that the amount of chlorides in the solid material is acceptable or can be decreased. Either comparison may be made in relation to the concentration of sulphur dioxide of the gas mixture 2 as sensed by gas analyser 148 and/or in relation to the emission limits of the gas cleaning system 100.

It is contemplated that, in step C, the process computer 50 or 150 may account for the present concentration of chlorides in the circulating solid material, as determined in step B, when it determines whether the amount of chloride containing compound added by chloride supply system 39, 139, and/or 239 needs to be adjusted. For example, if the concentration of sulphur dioxide of the gas mixture 2 exceeds a first predetermined value (such as, for example, 500 mg/Nm³ d.g. of SO₂) and the concentration of chlorides in the circulating solid material is less than a second predetermined value (such as, for example, less than 100 gram/kg) then the amount of chloride containing compound added by chloride supply system 39, 139, and/or 239 can be increased. Conversely, if the concentration of sulphur dioxide of the gas mixture 2 exceeds a first predetermined value (such as, for example, 500 mg/Nm³ d.g. of SO₂), but the concentration of chlorides in the circulating solid material is greater than a second predetermined value (such as, for example, 100 gram/kg) then the amount of chloride containing compound added by chloride supply system 39, 139, and/or 239 can be maintained (i.e., no change) or decreased. The difference between the concentration of chlorides in the circulating solid material and the predetermined value can be used to determine the magnitude of the adjustment needed. It will be appreciated that a table or a mathematical model can be utilized, such table or mathematical model describing, for each combination of concentration of sulphur dioxide concentration of the gas mixture 2 and concentration of chlorides in the circulating solid material, if there is a need for extra chlorides, and, if so, how large that need is.

As shown in Fig. 3 step C ends either with proceeding directly to step A, if it has been found that the gas cleaning system 1, 100 can manage the present concentration of sulphur dioxide, i.e, the amount of chloride containing compound added to the solid material does not need to be adjusted, or with proceeding to step D if it has been found that the amount of chloride containing compound added to the solid material needs to be adjusted.

In step D, the process computer 50 or 150 provides a signal to the chloride supply system 39, 139, and/or 239 to either increase or decrease the amount of chloride containing compound added to the solid material. As previously noted, chlorides are supplied to the circulating solid material for the purpose of improving the capability of the gas cleaning system 1, 100 to manage removing a desired amount of the present concentration of sulphur dioxide of the gas mixture 2. The chloride containing compound could be supplied more or less continuously, or could be supplied only on occasions of high concentration of sulphur dioxide in the gas mixture. The amount of chloride containing compound added by chloride supply system 39, 139, and/or 239 could be set to a fixed value, such as 5 litre of aqueous calcium chloride solution per minute, in which case the amount of chloride containing compound added to the solid material is adjusted by either: (i) activating the system 39, 139, and/or 239 to provide the fixed value of chloride containing compound to the solid material; or (ii) de-activating the system 39, 139, and/or 239, to stop the addition of chloride containing compound to the solid material. Alternatively, the amount of chloride containing compound added by chloride supply system 39, 139, and/or 239 could be adjustable over a range, in which case the amount of chloride containing compound added by chloride supply system 39, 139, and/or 239 can be adjusted in proportion to the amount of chloride needed, as determined in step C.

The discovery on which the various embodiments of the present invention is based, will now be described in more detail.

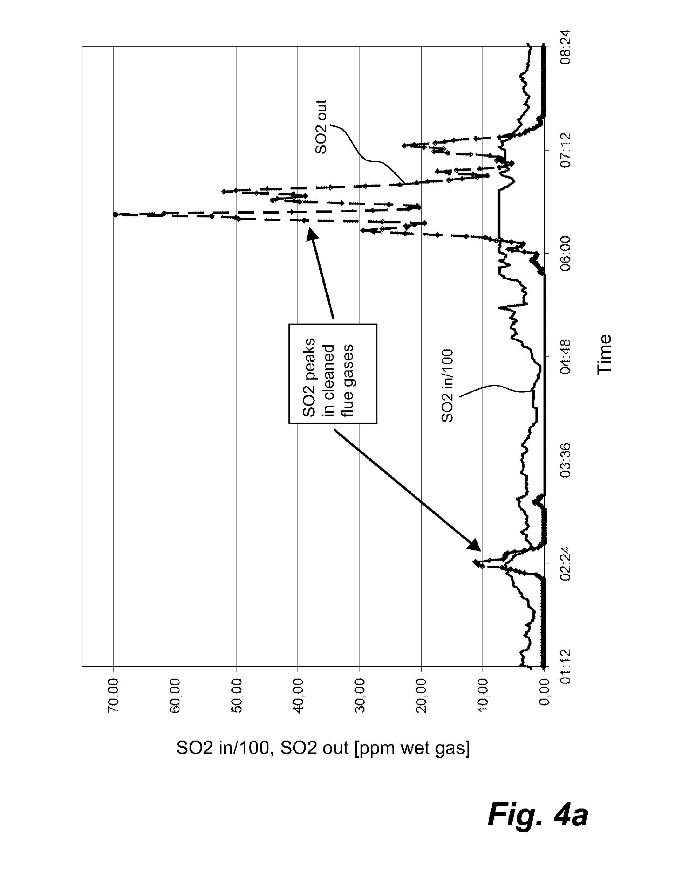

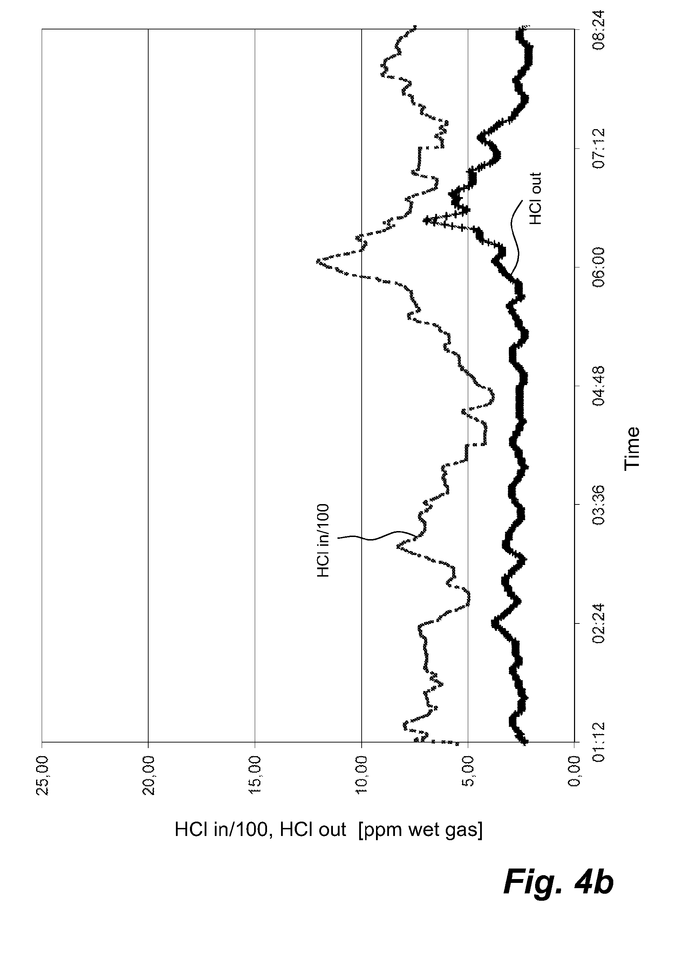

Fig. 4a illustrates measured concentrations of sulphur dioxide of a gas cleaning system operating in accordance with the technique of the prior art. Fig. 4b illustrates measured concentrations of hydrochloric acid of the same gas cleaning system operating in accordance with the technique of the prior art, and during the same time period as that of Fig. 4a. The respective x-axis illustrates a time-scale. Fig. 4a and Fig. 4b illustrate operation during slightly more than 7 hours. The respective y-axis illustrates the concentrations of sulphur dioxide and hydrochloric acid, respectively, divided by a factor 100, in raw flue gas (the respective concentrations being denoted "S02 in/100" and "HCl in/100" in Fig. 4a and Fig. 4b), i.e., in flue gas that had not passed through the gas cleaning system, and the concentrations of sulphur dioxide and hydrochloric acid in the cleaned flue gases (the respective concentrations being denoted "S02 out" and "HCl out" in Fig. 4a and Fig. 4b), all in the unit ppm (parts per million) wet gas. The raw flue gas emanated from a waste incineration plant incinerating household waste along with some industrial waste. It is clearly illustrated in Fig. 4a that there are two quite high peaks of sulphur dioxide in the cleaned flue gases. These two peaks correspond to increases in the respective concentration of sulphur dioxide of the raw flue gas, the SO₂ analyser analysing the SO₂ concentration in the raw flue gas even appears to reach its upper limit during a short time period, but the respective increases in the concentration of sulphur dioxide of the raw flue gas is not in proportion to the respective large increase in the concentration of sulphur dioxide of the cleaned flue gases.

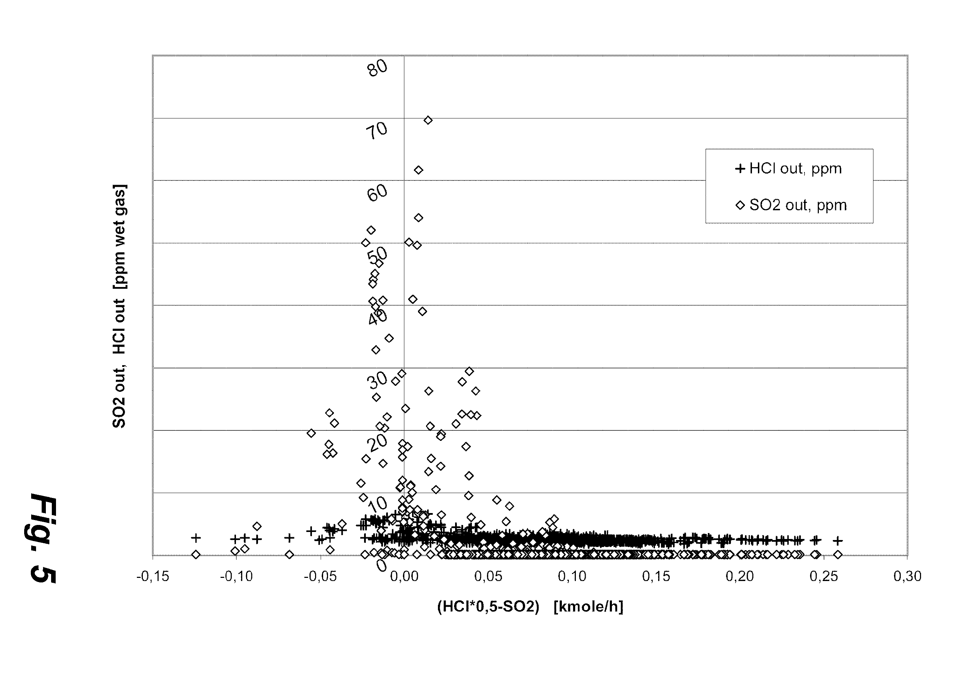

Fig. 5 illustrates one of the discoveries on which the present invention is based. The x-axis represents the relation between hydrochloric acid and sulphur dioxide in the gas mixture 2 just before entering the contact reactor 4 of the gas cleaning system 1, i.e., the relation, on a kmole/h basis, between hydrochloric acid and sulphur dioxide in the raw flue gas. The y-axis represents the concentration of sulphur dioxide and hydrochloric acid, respectively, in the cleaned flue gases 14 (the respective concentrations being denoted "S02 out" and "HCl out" in Fig. 5), in the unit ppm wet gas. The gas mixture 2 was typical of the flue gases generated in the incineration of household waste along with some industrial waste. The concentrations of hydrochloric acid and sulphur dioxide of the gas mixture 2 were measured upstream and downstream of the gas cleaning system 1 on a continuous basis, e.g., by means of gas analysers as described hereinbefore. Measurement data records were registered once per minute, such that each data record illustrated as a point in Fig. 5 illustrates the average value during that minute. For each data record it was calculated which amount, in kmole/h, of hydrochloric acid that had entered the gas cleaning system 1 with the gas mixture 2 during that minute, and which amount, in kmole/h, of sulphur dioxide that had entered the gas cleaning system 1 with the gas mixture 2 during that minute. Then, for each data record, the amount of hydrochloric acid was multiplied with 0.5, and then the amount of sulphur dioxide was subtracted. The reason for multiplying the amount, in kmole/h, of hydrochloric acid by 0.5 is the difference between hydrochloric acid and sulphur dioxide in the need for hydroxide, as has been described hereinbefore with reference to Fig. 1. Consequently, a value on the x-axis of "0.00" means that the amount, in kmole/h, of hydrochloric acid is two times the amount, in kmole/h, of sulphur dioxide in the gas mixture 2 upstream of the contact reactor 4. When it comes to the consumption of fresh absorbent material, such as calcium oxide which is slaked in the mixer 8 to form calcium hydroxide, it could be said that the value "0.00" on the x-axis means that the amount of fresh absorbent, such as slaked lime, consumed by the hydrochloric acid is substantially equal to the amount of fresh absorbent consumed by the sulphur dioxide, under the approximation that all of the hydrochloric acid and all of the sulphur dioxide is removed from the gas mixture 2 in the gas cleaning system
1. A positive value on the x-axis indicates that more than half of the fresh absorbent is consumed by the hydrochloric acid, and that the concentration of hydrochloric acid in the gas mixture 2 is high in comparison to the concentration of sulphur dioxide. A negative value on the x-axis indicates that more than half of the fresh absorbent is consumed by the sulphur dioxide, and that the concentration of hydrochloric acid in the gas mixture 2 is low in comparison to the concentration of sulphur dioxide.
   The y-axis of the diagram of Fig. 5 illustrates the concentration of sulphur dioxide and hydrochloric acid, respectively, in ppm wet gas in the cleaned flue gases 14 for each respective data record. Thus, each data record comprises the relation between the amount, in kmole/h, of hydrochloric acid and sulphur dioxide in the gas mixture 2, and the corresponding concentration of sulphur dioxide or hydrochloric acid in the cleaned flue gases 14.
   It can be seen from Fig. 5 that the concentration of sulphur dioxide in the cleaned flue gases 14 is very close to 0 ppm wet gas when the value on the x-axis is above about 0.10 kmole/h. On the other hand, the concentration of sulphur dioxide in the cleaned flue gases 14 is 5 to 70 ppm wet gas when the value on the x-axis is about 0.05 kmole/h and lower. Thus, a high concentration of hydrochloric acid in the gas mixture 2 in relation to the concentration of sulphur dioxide results in an efficient removal of the sulphur dioxide in the gas cleaning system 1, regardless of the concentration of the sulphur dioxide in the gas mixture
2. It is not believed that this effect is caused by reactions in the gas phase between the hydrochloric acid and the sulphur dioxide. A high concentration of hydrochloric acid in the gas mixture 2 results in a high concentration of chlorides in the solid material circulating in the gas cleaning system 1. It is believed that this high concentration of chlorides in the solid material circulating in the gas cleaning system 1 is advantageous for the absorption of sulphur dioxide.

During periods of low concentration of hydrochloric acid in the gas mixture 2 the concentration of chlorides in the solid material circulating in the gas cleaning system 1 decreases. This causes increased concentrations of sulphur dioxide in the cleaned flue gases 14, an effect that is particularly serious when the concentration of sulphur dioxide in the gas mixture 2 increases rapidly forming a peak of sulphur dioxide. As has been described hereinbefore with reference to Fig. 1 to Fig. 3 it is possible to alleviate this negative effect by supplying, when needed, chlorides from a tank 40, 240, or a silo 140 directly to the circulating solid material. By supplying chlorides directly to the circulating solid material the value on the x-axis of Fig. 5 is pushed towards higher positive values in what could be called an artificial manner, such that the concentration of sulphur dioxide of the cleaned flue gases 14 is decreased.

It can be seen from Fig. 5 that the concentration of hydrochloric acid in the cleaned flue gases 14 appears to be lower when the value on the x-axis is about 0.10 kmole/h or higher, than when the value on the x-axis is about 0.05 kmole/h or lower. Hence, the concentration of chlorides of the solid material circulating in the gas cleaning system 1 appears to affect also the removal of hydrochloric acid from the gas mixture 2. Thus, the supply of chlorides to the solid material circulating in the gas cleaning system 1 during periods when the concentration of sulphur dioxide is high in relation to the concentration of hydrochloric acid of the gas mixture 2 appears to improve not only the removal of sulphur dioxide but also the removal of hydrochloric acid.

It will be appreciated that numerous variants of the embodiments described above are possible within the scope of the appended claims.

For instance it has been described above that calcium chloride is utilized in the form of an aqueous solution, or in the form of a solid powder. Often such calcium chloride would have the form of a technical grade calcium chloride. It will be appreciated that calcium chloride in other grades may also be utilized. One particularly attractive option is to utilize a waste product that contains a high concentration of calcium chloride. For instance, a discharged solid material product from another gas cleaning system, which operates at a high concentration of hydrochloric acid in the raw flue gases, can be filled into the silo 140 to be utilized as a source of calcium chloride in the gas cleaning system 100. Furthermore, it is also possible to store some of the material that is discharged via the rotary discharger 24 of the gas cleaning system 1 or 100 during periods of high concentration of hydrochloric acid of the gas mixture 2, and to utilize such material, supplied from the silo 140, as a source of calcium chloride during periods of low hydrochloric acid concentration of the gas mixture 2.

Above it has been described that calcium chloride, CaCl₂, is utilized in different forms. Other chloride containing compounds, such as sodium chloride, NaCl, magnesium chloride, MgCl₂, potassium chloride, KCl, can also be utilized. Thus, compounds comprising chloride ions with various counter ions can be utilized. The choice of which compound to utilize generally depends on availability, price and non-toxicity. In general the most preferred compounds are calcium chloride, magnesium chloride, and sodium chloride.

Above it has been described that the supply of the chloride containing compound to the mixer 8 is controlled based on the concentration of sulphur dioxide of the gas mixture 2. It will be appreciated that the control of the supply of the chloride containing compound may also account for load changes of the incinerator or boiler, as the case may be. Such load changes result in a change of the flow, in Nm³/h, of the gas mixture 2 to the gas cleaning system 1, 100. An increased or decreased load results in a change in the amount, in kg/h or a similar unit, of sulphur dioxide that is to be removed in the gas cleaning system 1, 100. Such changes in the amount, in kg/h, of sulphur dioxide that is to be removed influence, even when the concentration as such of sulphur dioxide remains constant, the concentration of chlorides in said circulating solid material that is required to obtain a sufficient removal of sulphur dioxide. Thus, load changes are preferably also accounted for in the control of the supply of the chloride containing compound to the mixer 8. To this end, a load signal is preferably sent to the process computer 50 or 150 from the central operating computer, not shown, that controls the operation of the waste incinerator or boiler. For example, if the load signal indicates an increased load, the process computer 50 or 150 may account for this increased load by increasing the amount of chloride containing compound supplied to the mixer 8. Conversely, if the load signal indicates a decreased load, the process computer 50 or 150 may account for this decreased load by decreasing the amount of chloride containing compound supplied to the mixer 8.

It has been illustrated in Fig. 1 and Fig. 2 that the gas analysers 48, 148, 149 measure the concentration of sulphur dioxide and hydrochloric acid, respectively, just upstream of the contact reactor 4. It will be appreciated that it is also possible to measure these concentrations further upstream, i.e., closer to where the gas mixture 2 is formed, to get a somewhat longer time for reacting on a sulphur dioxide peak that is coming up.

Above, it has been illustrated that the chloride containing compound, i.e., the chloride containing solution and/or the chloride containing solid compound, is fed to the mixer 8. Although this is often the preferred location for supplying the chloride containing compound, there are alternatives. For instance the chloride containing compound could be added to the common dust storage system 20, to the fabric filter 6, or directly to the contact reactor 4. In many cases it is preferable to supply the chloride containing compound to the mixer 8, because the chloride containing compound will be thoroughly mixed with the solid material in the mixer 8, and will be introduced in the contact reactor 4 after a comparably short time.

## Claims

1. A gas cleaning system for separating gaseous pollutants, including sulphur dioxide, from process gases (2), such as flue gases, said gas cleaning system (1; 100) comprising a contact reactor (4) which is operative for mixing the process gases (2) with a solid material comprising a particulate absorbent material, such that said particulate absorbent material reacts with sulphur dioxide, and a dust separator (6) which is operative for capturing the particulate absorbent material, the dust separator (6) being operative for discharging cleaned process gases (14),
**characterised in that** the gas cleaning system (1; 100) further comprises
a sulphur dioxide measurement device (48; 148; 348), which is operative for the purpose of measuring, directly or indirectly, the amount of sulphur dioxide of the process gases (2),
a chloride supply system (39; 139; 239) which is operative for supplying at least one chloride containing compound to said solid material, and
a control system (50; 150), which is operative for the purpose of controlling the supply of said at least one chloride containing compound from said chloride supply system (39; 139; 239) to said solid material in response to an amount of sulphur dioxide in the process gases (2) measured by said sulphur dioxide measurement device (48; 148; 348).

2. A gas cleaning system according to claim 1, wherein said chloride supply system (39; 239) comprises a tank (40; 140), which is operative for containing a chloride containing solution.

3. A gas cleaning system according to any one of claims 1-2, wherein said chloride supply system (139) comprises a silo (140) which is operative for containing a chloride containing solid compound.

4. A gas cleaning system according to any one of claims 1-3, wherein said gas cleaning system (100) comprises a first chloride supply system (139) which is operative for supplying a chloride containing solid compound to said solid material, and a second chloride supply system (239) which is operative for supplying a chloride containing solution to said solid material.

5. A gas cleaning system according to any one of the preceding claims, wherein said sulphur dioxide measurement device comprises a first gas analyser (48; 148) which is operative for measuring the concentration of sulphur dioxide of said process gases (2) upstream of said contact reactor (4).

6. A gas cleaning system according to any one of the preceding claims, wherein said gas cleaning system (100) comprises a second gas analyser (149) which is operative for measuring a concentration of hydrochloric acid of said process gases (2) upstream of said contact reactor (4), the control system (150) being operative for estimating, based on measurements by said second gas analyser (149), the concentration of chlorides in said solid material, and for determining whether or not the concentration of chlorides in the solid material needs to be adjusted.

7. A gas cleaning system according to any one of the preceding claims, wherein said sulphur dioxide measurement device comprises a third gas analyser (348) which is operative for measuring the concentration of sulphur dioxide of said cleaned process gases (14) downstream of said dust separator (6).

8. A gas cleaning system according to any one of the preceding claims, wherein the gas cleaning system (1; 100) is operative for circulating at least a portion of said solid material, said control system (150) being operative for estimating the concentration of chlorides of said solid material, and for controlling the supply of said at least one chloride containing compound from said chloride supply system (39; 139; 239) based on an estimated need for chlorides of said solid material with respect to an amount of sulphur dioxide of said process gases (2) as measured by said sulphur dioxide measurement device (148).

9. A method of separating gaseous pollutants, including sulphur dioxide, from process gases (2), such as flue gases, in which method the process gases (2) are transported to a gas cleaning system (1; 100), said gas cleaning system (1; 100) comprising a contact reactor (4) in which the process gases (2) are mixed with a solid material comprising a particulate absorbent material, such that said particulate absorbent material reacts with sulphur dioxide, and a dust separator (6) in which the solid material is separated, and in which method cleaned process gases (14) leave the dust separator (6),
**characterised in**
measuring, directly or indirectly, the amount of sulphur dioxide of the process gases (2),
determining whether or not the chloride concentration of said solid material needs to be adjusted, and
controlling, in response to said measured amount of sulphur dioxide of the process gases (2), a supply of at least one chloride containing compound to said solid material.

10. A method according to claim 9, wherein said at least one chloride containing compound comprises a chloride containing solution.

11. A method according to any one of claims 9-10, wherein said at least one chloride containing compound comprises a chloride containing solid compound.

12. A method according to any one of claims 9-11, wherein a chloride containing solid compound may be supplied to said solid material from a first chloride supply system (139), and a chloride containing solution may be supplied to said solid material from a second chloride supply system (239).

13. A method according to any one of claims 9-12, wherein said measuring, directly or indirectly, the amount of sulphur dioxide of the process gases (2), comprises measuring the concentration of sulphur dioxide of said process gases (2) upstream of said contact reactor (4).

14. A method according to any one of claims 9-13, wherein the concentration of sulphur dioxide of said cleaned process gases (14) is measured downstream of said dust separator (6), said step of determining whether or not the chloride concentration of said solid material needs to be adjusted includes accounting for the measured concentration of sulphur dioxide of said cleaned process gases (14).

15. A method according to any one of claims 9-14, said method further comprising, prior to the step of determining whether or not the chloride concentration of said solid material needs to be adjusted, a step of estimating a present concentration of chlorides of said solid material, said step of determining whether or not the chloride concentration of said solid material needs to be adjusted further comprising accounting for the estimated present concentration of chlorides of said solid material.

16. A method according to claim 15, further comprising measuring a concentration of hydrochloric acid of said process gases (2) upstream of said contact reactor (4), the present concentration of chlorides of said solid material being estimated based on such measurement of the concentration of hydrochloric acid of said process gases (2).

17. A method according to any one of claims 9-16, wherein said chloride containing compound is comprised in a waste material from a gas cleaning process, the concentration of chlorides of said waste material being higher than the concentration of chlorides of said solid material.

18. A method according to claim 17, wherein said waste material is a waste material that has been stored from a period of a high concentration of hydrochloric acid of said process gases (2) of said gas cleaning system (1; 100).

19. A method according to any one of claims 9-18, wherein said solid material is, after being separated in said dust separator (6), at least partly circulated back to the contact reactor (4).

20. A method according to any one of claims 9-19, wherein said solid material is mixed with said chloride containing compound in a mixer (8) prior to mixing the process gases (2) with said solid material in the contact reactor (4).

21. A method according to any one of claims 9-20, wherein load changes of the combustion plant generating the process gases (2) are accounted for in the control of the supply of said at least one chloride containing compound to said solid material.
